# FASCICULE DE BREVET EUROPEEN

(11) **EP 2 455 857 B1**
(45) Date de publication et mention de la délivrance du brevet: **24.03.2021**
(21) Numéro de dépôt: 11189933.2
(22) Date de dépôt: 21.11.2011
(51) Int. Cl.: G06F 9/44

(54) **Banc de développement d'application logicielle aéronautique comportant un langage structuré de description fonctionnelle**
Entwicklungsbank einer Luftfahrt-Softwareanwendung, die eine Struktursprache zur funktionellen Beschreibung umfasst
Development system for an aeronautical software application comprising a structured functional description language

(30) Priorité: 23.11.2010 FR 1004560
(43) Date de publication de la demande: 23.05.2012
(73) Titulaire: Thales, 92400 Courbevoie (FR)
(72) Inventeur: Leconte, Hervé, 33187 Le Haillan Cedex (FR); Thiry, Yannick, 33187 Le Haillan Cedex (FR); Arneau, David, 33600 Pessac (FR)
(74) Mandataire: Marks & Clerk France

(56) Documents cités:
- Y. Lefebvre: "Understanding ARINC 661 and the benefits of 661-based development tools", Presagis Whitepapers , 27 juin 2008 (2008-06-27), pages 1-20, XP002659657, Extrait de l'Internet: URL:http://www.presagis.com/files/whitepap ers/2006-06-WP-Arinc661-XT.pdf [extrait le 2011-09-19]
- YANNICK LEFEBVRE: "A flexible solution to deploy avionics displays to multiple Embedded Platforms", DIGITAL AVIONICS SYSTEMS CONFERENCE, 2008. DASC 2008. IEEE/AIAA 27TH, IEEE, PISCATAWAY, NJ, USA, 26 octobre 2008 (2008-10-26), pages 5.A.3-1, XP031372624, ISBN: 978-1-4244-2207-4
- "Esterel Technologies Introduces SCADE® ARINC 661 Solutions for Interactive Cockpit Displays Development", , 13 octobre 2010 (2010-10-13), pages 1-4, XP002659658, Elancourt, France Extrait de l'Internet: URL:http://www.esterel-technologies.com/ne ws-events/press-releases/2010/Esterel-Tech nologies-Introduces-SCADE-ARINC-661-Soluti ons%20for-Interactive-Cockpit-Displays-Dev elopment [extrait le 2011-09-21]
- ERIC BARBONI ET AL: "Model-Based Engineering of Widgets, User Applications and Servers Compliant with ARINC 661 Specification", 26 juillet 2006 (2006-07-26), INTERACTIVE SYSTEMS. DESIGN, SPECIFICATION, AND VERIFICATION; [LECTURE NOTES IN COMPUTER SCIENCE;;LNCS], SPRINGER BERLIN HEIDELBERG, BERLIN, HEIDELBERG, PAGE(S) 25 - 38, XP019076806, ISBN: 978-3-540-69553-0 * le document en entier *
- VERHOEVEN R ET AL: "Prototyping interactive cockpit applications", DIGITAL AVIONICS SYSTEMS CONFERENCE, 2004. DASC 04. THE 23RD SALT LAKE CITY, UT, USA 24-28 OCT. 2004, PISCATAWAY, NJ, USA,IEEE, US, vol. soft, 24 octobre 2004 (2004-10-24), pages 9.A.3-91, XP010764917, ISBN: 978-0-7803-8539-9

## Description

Le domaine de l'invention est celui des bancs de développement d'application logicielle aéronautique comportant une interface graphique interactive.

Les cockpits d'aéronefs modernes comportent un ensemble de dispositifs de visualisation interactifs qui permettent de visualiser, de commander et de modifier l'ensemble des paramètres nécessaires au pilotage, à la navigation et plus généralement à l'accomplissement de la mission. Le nombre de paramètres à gérer est considérable et il existe une multitude de représentations graphiques possibles de ces paramètres.

L'application logicielle aéronautique est réalisée sur un banc de développement informatique dans un environnement informatique de type « PC ». Actuellement, pour un grand nombre d'applications aéronautiques, la définition des interfaces homme-machine ou « IHM » est régie par une norme aéronautique : l'ARINC 661. Cette norme spécifie l'interface entre le sous-système de visualisation d'un cockpit ou « CDS » signifiant « Cockpit Display System » et les autres équipements du système avion. Elle définit notamment deux interfaces externes entre le CDS et les systèmes de l'avion qui sont :
- L'interface entre les équipements avioniques dits systèmes utilisateurs et le système d'affichage graphique ou Client-serveur ;
- Le comportement-système des éléments graphiques affichables.

La partie graphique des IHM embarquées du domaine aéronautique sont décrites dans des fichiers ou DF pour « Définition File ». Les DF décrivent les « widgets » composant l'IHM indépendamment de leur comportement. On entend par widget une unité logicielle associée à une représentation graphique et un comportement permettant à l'équipage soit de recevoir des informations, soit au moyen d'une interface homme-machine de donner des instructions. D'un point de vue logiciel, chaque widget propose des interfaces techniques de type « clic down », « clic up », « change color »... permettant la production d'événements et la modification de ce widget. Leur comportement est codé au sein d'une application dite « User Application » ou « UA » qui interagit avec les widgets de l'IHM au travers d'un protocole d'échange normalisé ARINC 661. Ainsi, l'IHM représente l'état du cœur fonctionnel de l'UA.

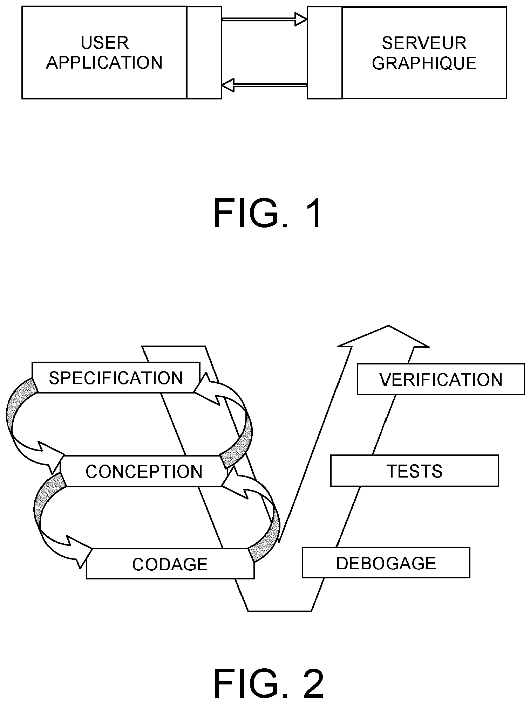

Le fonctionnement symbolique des échanges réciproques entre l'User Application et le serveur graphique est représenté en figure 1.

Le processus complet du développement d'une application logicielle aéronautique est représenté en figure 2 sous la forme d'un V majuscule. Ce processus comprend six étapes qui sont :
- Etape de spécification ;
- Etape de conception ou de « design » ;
- Etape de codage ;
- Etape de vérification ou de débogage ;
- Etape de tests fonctionnels ;
- Etape de vérification finale.

Techniquement, le banc de développement informatique doit répondre aux exigences principales suivantes :
- Concevoir, mettre en œuvre et utiliser une méthode de conception et de développement unifiée des IHM de type ARINC 661 de façon à :
   ∘ Réduire les coûts de développement récurrents liés à des méthodes de développement différentes et non unifiées ;
   ∘ Réutiliser au mieux les composants d'IHM.
- Formaliser les interfaces entre le cœur fonctionnel de l'UA et l'IHM afin de :
   ∘ Réduire les impacts de l'évolution de la spécification client ou du cœur fonctionnel sur l'IHM en termes de design et de code.
- Concevoir, mettre en œuvre et utiliser une plate-forme ou banc de développement offrant les capacités de conception et de développement unifiées des IHM ARINC 661 afin de :
   ∘ Déployer des services unifiés ;
   ∘ Unifier la méthode par l'utilisation du banc qui l'implémente ;
   ∘ Réduire les activités de design et de codage manuel.

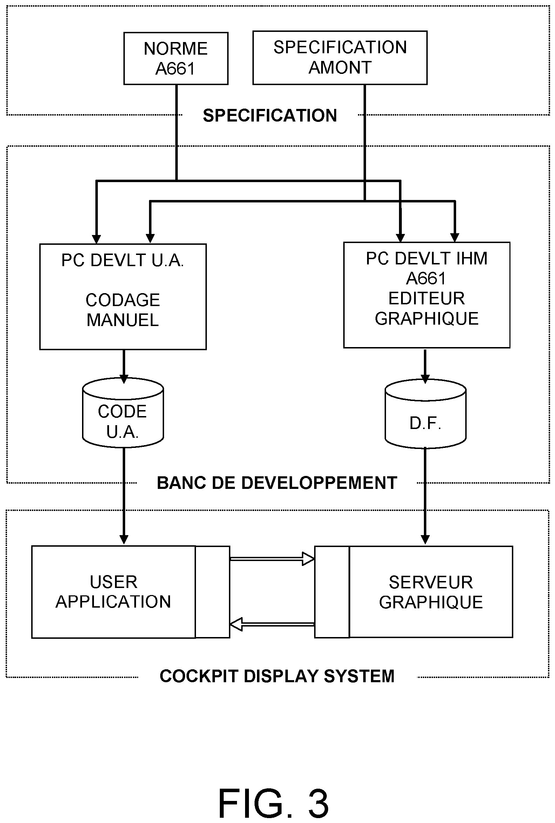

Actuellement, le développement des applications logicielles aéronautiques passe par l'application d'un processus classique de développement en code manuel avec des méthodes de conception différentes selon les projets. Ce développement est représenté en figure 3. Il comprend trois parties encadrées en pointillés. Le premier cadre regroupe l'étape de spécifications amont, le second cadre regroupe les fonctionnalités du banc de développement, le troisième cadre enfin l'implantation dans le CDS.

Traditionnellement, la réalisation par le banc de développement d'un système graphique interactif avionique se réalise en deux étapes :
- Création de l'aspect « statique » de la page à l'aide d'un atelier graphique, qui permet de placer des widgets sur une page d'IHM et de définir ses propriétés d'initialisation ;
- Développement en code manuel du logiciel de la logique de traitement, permettant de modifier le contenu de la page en fonction d'événements entrants.

L'activité de développement de l'IHM ARINC 661 consiste à :
- Construire l'IHM graphique, c'est-à-dire utiliser et organiser les widgets ARINC 661 en fonction des exigences de la spécification amont en se conformant aux caractéristiques des widgets ARINC 661 référencés dans le code manuel ;
- Produire le Définition File.

L'activité de codage manuel consiste à :
- Implémenter les exigences de la spécification amont en terme de fonction logique ;
- Produire les blocs de commande ARINC 661 correspondant à l'état du cœur fonctionnel en se conformant à la Norme ARINC 661 et aux caractéristiques des widgets ARINC 661 du « Définition File » ;
- Consommer les notifications des widgets ARINC 661 du « Définition File » en se conformant à la norme ARINC 661 et aux caractéristiques des widgets ARINC 661 du Definition File ;
- Transmettre les évènements au cœur fonctionnel.

Les conséquences directes de cette méthode de conception sont qu'une modification des exigences de la spécification amont portant sur le fonctionnel de l'IHM impacte directement le code manuel avec un risque fort d'incohérence avec le « Definition File » et une modification des exigences de la spécification amont portant sur le graphique de l'IHM impacte directement le Definition File avec un risque fort d'incohérence avec le fonctionnel de l'IHM.

Le document "Understanding ARINC 661 and the benefits of 661-based development tools" de Y. Lefebvre chez Presagis Whitepaper, publié le 27 juin 2008, décrit la norme aéronautique ARINC 661 et aborde la création d'un Définition File comprenant des widgets dans un banc de développement logiciel standard.

Au final, les inconvénients des solutions existantes sont les suivants :
- Les évolutions sur l'IHM graphique impactent directement le design et le code de l'interface entre l'IHM et le cœur fonctionnel de l'UA et donc nécessitent un surcroît d'activité sur le V descendant du cycle de développement tel que représenté en figure 2 ;
- Les évolutions sur les interfaces du cœur fonctionnel de l'UA impactent directement le design et le code de l'interface entre l'IHM graphique et le cœur fonctionnel et donc nécessitent un surcroît d'activité sur le V descendant du cycle de développement ;
- Les activités de codage entraînent un surcroît d'activité de test sur le V remontant du cycle de développement ;
- Les développements d'IHM ARINC 661 sont réalisés selon des méthodes propres à chaque projet. Il n'existe pas de méthode unifiée et de formalisation des développements d'IHM ARINC 661 ;
- La complexité et le volume du design et du code manuel entraînent des problèmes de maintenance des IHM. Le code est souvent modifié en direct et le design est modifié à posteriori par reverse engineering.

Le banc de développement selon l'invention ne présente pas ses inconvénients. L'invention consiste à mettre en œuvre un banc de
développement intégré permettant la production de contrôleur d'IHM ARINC 661 basée sur un langage structuré de description fonctionnelle.

Plus précisément, l'invention a pour objet un banc de développement d'application logicielle aéronautique assurant la production d'une interface homme-machine graphique au niveau d'un ou de plusieurs équipements de visualisation, ledit banc comprenant des moyens informatiques traitant des outils logiciels servant à créer, simuler ou intégrer d'une part des fonctions graphiques, décrites dans un fichier appelé « Définition File » décrivant des widgets, et d'autre part des fonctions logiques permettant de modifier le contenu des fonctions graphiques en fonction d'événements entrants au niveau de l'équipement ou des équipements de visualisation, le banc comportant un unique éditeur graphique de conception d'un logiciel exécutable dans le ou les équipements de visualisation, ledit éditeur produisant un langage structuré qui :
- décrit chaque widget contenu dans le Definition File et ayant des capacités fonctionnelles ;
- associe des variables consommées dites « input plugs » aux attributs modifiables dudit widget, une « input plug » étant une donnée spécifique permettant de modifier dynamiquement un ou plusieurs attributs graphiques dudit widget ;
- associe des variables produites dites « output plugs » aux notifications des événements produits par le dit widget, un « output plug » étant une donnée signalant une demande de changement d'état des équipements ;
les variables produites et consommées étant destinées à être échangées avec la logique fonctionnelle d'une application dite « User Application ».

Avantageusement, le logiciel développé, les fonctions graphiques associées et leurs fonctionnalités sont conformes à la norme aéronautique ARINC 661.

Avantageusement, le langage structuré de description fonctionnelle est implémenté dans un langage de description de type « XML », acronyme de « eXtended Markup Language".

Avantageusement, le banc comporte également des moyens de génération du logiciel d'Interface Homme-machine assurant les fonctions suivantes :
- Traduction du langage de description fonctionnelle en langage de programmation de type C ou C++ ou ADA ;
- Activation du contrôle de flux dans le code généré par l'utilisation des « inputs plugs » d'activation contrôlant l'application des commandes ARINC 661 ;
- Activation du contrôle de flux dans le code généré par le contrôle de la modification des « inputs plugs » associés aux attributs modifiables.

L'invention sera mieux comprise et d'autres avantages apparaîtront à la lecture de la description qui va suivre donnée à titre non limitatif et grâce aux figures annexées parmi lesquelles :
La figure 1 représente le fonctionnement symbolique d'un système de visualisations de cockpit ;
La figure 2 représente le processus complet du développement d'une application logicielle aéronautique sous la forme d'un V majuscule ;
La figure 3 représente l'architecture d'un banc de développement selon l'art antérieur ;
La figure 4 représente l'architecture d'un banc de développement selon l'invention.

La présente invention permet de réaliser une IHM ARINC 661 sur un banc de développement logiciel qui :
- offre une vue cohérente et immédiate des aspects graphiques et fonctionnels ;
- corrèle la construction des pages d'IHM avec la définition de leur comportement fonctionnel ;
- contrôle les flux provenant de la logique fonctionnelle ;
- traduit ce comportement fonctionnel en langage structuré ;
- assure la production automatique de code à partir du langage fonctionnel structurée.

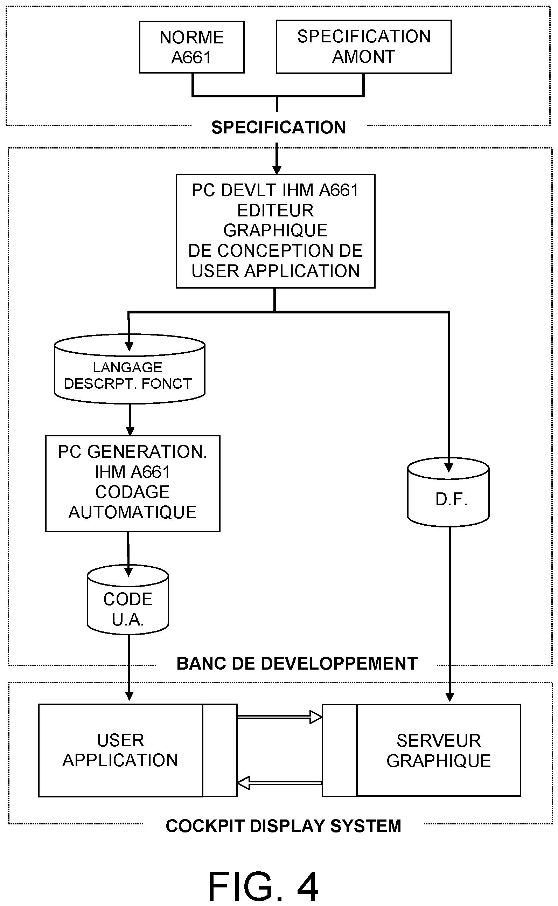

Le développement des applications logicielles aéronautiques selon l'invention est représenté en figure 4. Il comprend, comme précédemment, trois parties encadrées en pointillés. Le premier cadre regroupe l'étape de spécifications amont, le second cadre regroupe les fonctionnalités du banc de développement et le troisième cadre enfin l'implantation dans le CDS.

L'architecture du banc de développement selon l'invention est représentée dans le second cadre de la figure 4. La logique de traitement est composée d'un contrôleur d'IHM cohérent de l'aspect « statique » de la page et s'interfaçant avec la logique fonctionnelle. Il est à noter que, par commodité, on parle de « PC » pour désigner le matériel informatique de développement, ce qui ne signifie pas que les applications informatiques sont réalisées nécessairement sur des matériels uniques physiquement séparés. Cela signifie que les moyens informatiques mis en œuvre ont une structure, une complexité et des capacités de traitement et de mémorisation semblables à celles d'ordinateurs personnels grand public.

Le PC de développement d'IHM ARINC 661 noté « PC DEVLT IHM A661 » sur la figure 4 permet :
- La production de l'IHM graphique en utilisant et organisant les widgets ARINC 661 en fonction des exigences de la spécification amont. L'IHM graphique comporte la définition des capacités fonctionnelles des widgets. Des variables consommées dites « input plugs » sont associées aux attributs modifiables des widgets, une « input plug » étant une donnée spécifique permettant de modifier dynamiquement un ou plusieurs attributs graphiques du widget ;
- La définition des capacités fonctionnelles en associant des variables produites dites « output plugs » aux notifications d'évènement des widgets ARINC 661, une « output plug » étant une donnée signalant une demande de changement d'état des équipements ;
- La définition des capacités fonctionnelles en termes de contrôle de flux.

A titre d'exemples, un « input plug » nommé « FrequenceRadio » correspond aux attributs graphiques de texte « 102.4 », identifiant de l'élément graphique « 1,2,3 ». Un « output plug » nommé « FrequenceRadioChanged » correspond à la demande de changement d'état suivante : activation radio COM1 et modification de la fréquence radio COM1 à la valeur « 100.8 »

Le PC de développement d'IHM ARINC 661 se conforme à la norme ARINC 661 et donc assure la cohérence des interfaces ARINC 661 des widgets avec les définitions fonctionnelles associées. Les variables consommées et produites sont échangées avec la logique fonctionnelle de l'UA.

Le PC de développement d'IHM ARINC 661 produit le langage de description fonctionnelle. Le langage de description fonctionnelle est un langage structuré qui décrit :
- Chaque widget ARINC 661 contenu dans le DF et ayant des capacités fonctionnelles ;
- Pour chaque widget ARINC 661 fonctionnel, chacun de ses attributs modifiables et l'input plug lui correspondant ;
- Pour chaque widget ARINC 661 fonctionnel, chacun de ses évènements et l'output plug lui correspondant.

Le langage de description fonctionnelle est implémenté dans un langage de description de type XML (eXtended Markup Language). Ce langage est un langage informatique de balisage générique ; Il sert essentiellement à stocker/transférer des données de type texte Unicode structurées en champs arborescents. Ce langage est « extensible » car il permet à l'utilisateur de définir les balises des éléments.

Le second PC de génération d'IHM ARINC 661 noté « PC GENERATION IHM A661 » sur la figure 4 assure :
- La traduction du langage de description fonctionnelle en langage de programmation (C, C++, ADA, ...) ;
- L'activation du contrôle de flux dans le code généré par utilisation des inputs plugs d'activation contrôlant l'application des commandes ARINC 661 ;
- L'activation du contrôle de flux dans le code généré par le contrôle de la modification des inputs plugs associés aux attributs modifiables.

Le contrôle de flux sur les « input plugs » permet à l'exécution du code, une optimisation automatique et dynamique des paramètres techniques modifiés en fonction des évolutions des données spécifiques au métier de la User Application. Si une donnée spécifique au métier est émise à plusieurs reprises avec la même valeur, elle ne donne pas lieu à la modification des attributs graphiques et si, une donnée spécifique au métier impacte plusieurs attributs graphiques, seuls ceux qui changent de valeur sont pris en compte.

Un exemple de structure du langage de description fonctionnel au format XML est représenté dans le tableau 1 encadré ci-dessous. On y retrouve les éléments classiques du langage XML comme l'emploi des chevrons < et > pour identifier les mots-clés :

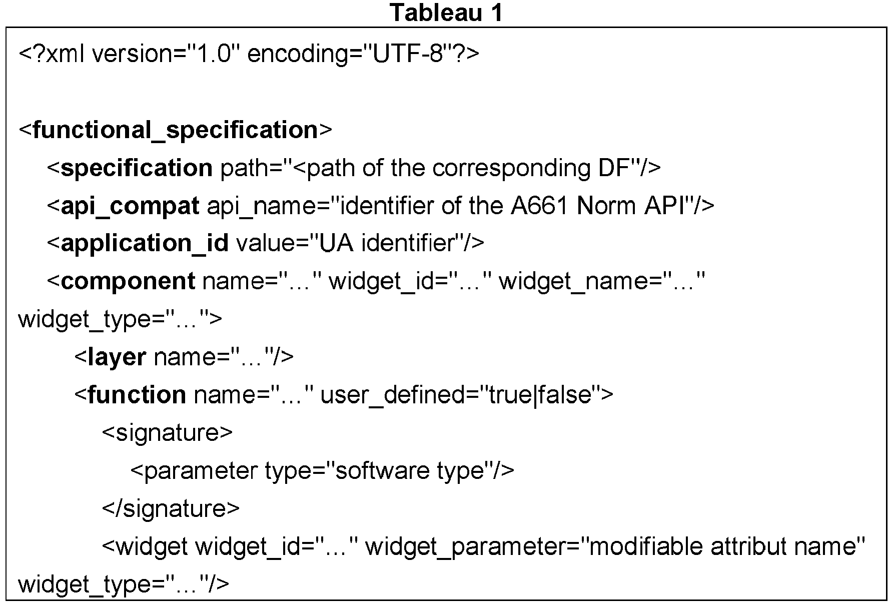

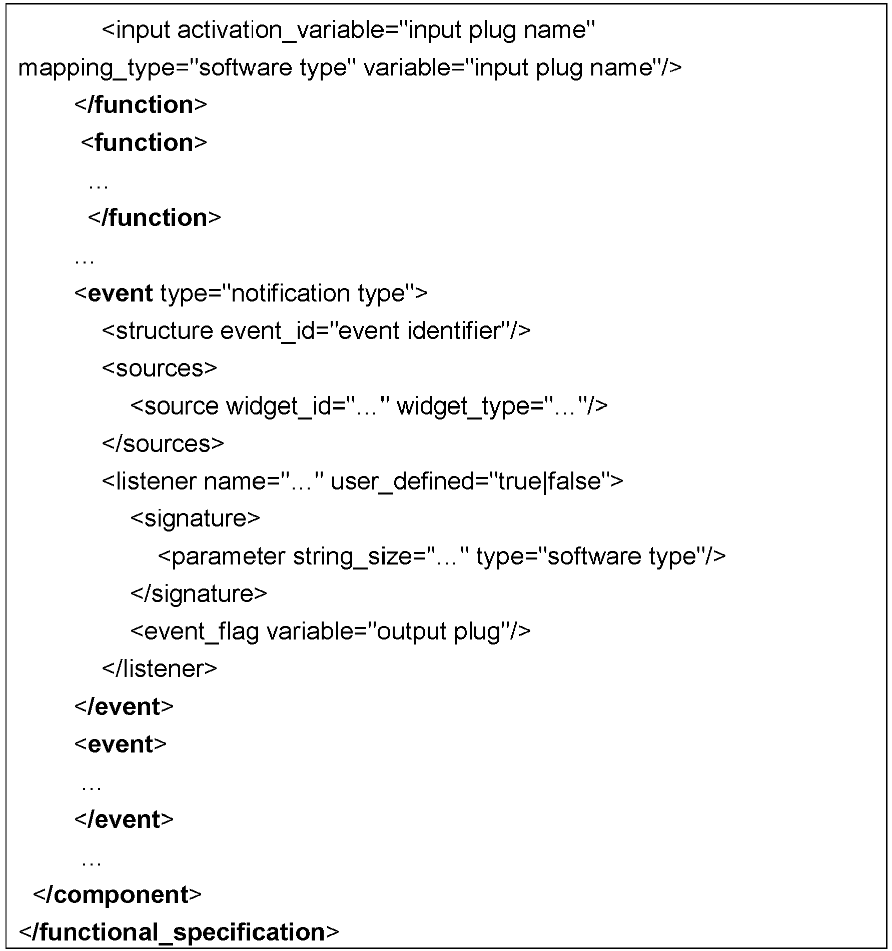

Les principaux avantages du banc de développement selon l'invention sont :
- Souplesse d'évolution par rapport aux modifications de la norme ARINC 661 ;
- Mise à niveau cohérente de l'IHM et du contrôleur associé ;
- Indépendance de la définition du contrôleur vis à vis du langage cible ;
- Réduction des activités de développement liée à l'utilisation d'un banc de développement intégré supprimant les activités de design et de codage ;
- Déploiement de la solution pour l'application d'une technique de développement unifiée ;
- Réutilisation des composants dans le cadre de l'utilisation d'une solution unifiée.

## Revendications

1. Banc de développement d'application logicielle aéronautique assurant la production d'une interface homme-machine graphique au niveau d'un ou de plusieurs équipements de visualisation, ledit banc comprenant des moyens informatiques traitant des outils logiciels servant à créer, simuler ou intégrer d'une part des fonctions graphiques, décrites dans un fichier appelé « Definition File » décrivant des widgets, et d'autre part des fonctions logiques permettant de modifier le contenu des fonctions graphiques en fonction d'événements entrants au niveau de l'équipement ou des équipements de visualisation,
**caractérisé en ce que** le banc comporte un unique éditeur graphique de conception d'un logiciel exécutable dans le ou les équipements de visualisation, ledit éditeur produisant un langage structuré qui :
- décrit chaque widget contenu dans le Definition File et ayant des capacités fonctionnelles ;
- associe des variables consommées dites « input plugs » aux attributs modifiables dudit widget, une « input plug » étant une donnée spécifique permettant de modifier dynamiquement un ou plusieurs attributs graphiques dudit widget ;
- associe des variables produites dites « output plugs » aux notifications des événements produits par le dit widget, un « output plug » étant une donnée signalant une demande de changement d'état des équipements ;
les variables produites et consommées étant destinées à être échangées avec la logique fonctionnelle d'une application dite « User Application ».

2. Banc de développement d'un logiciel exécutable dans un ou plusieurs équipements de visualisation selon la revendication 1, **caractérisé en ce que** le logiciel développé, les fonctions graphiques associées et leurs fonctionnalités sont conformes à la norme aéronautique ARINC 661.

3. Banc de développement d'un logiciel exécutable dans un ou plusieurs équipements de visualisation selon l'une des revendications 1 ou 2, **caractérisé en ce que** le langage structuré de description fonctionnelle est implémenté dans un langage de description de type « XML », acronyme de « eXtended Markup Language".

4. Banc de développement d'un logiciel exécutable dans un ou plusieurs équipements de visualisation selon les revendications 2 et 3, **caractérisé en ce que** le banc comporte également des moyens de génération du logiciel d'Interface Homme-machine assurant les fonctions suivantes :
- Traduction du langage de description fonctionnelle en langage de programmation de type C ou C++ ou ADA ;
- Activation du contrôle de flux dans le code généré par l'utilisation des « inputs plugs » d'activation contrôlant l'application des commandes ARINC 661 ;
- Activation du contrôle de flux dans le code généré par le contrôle de la modification des « inputs plugs » associés aux attributs modifiables.

## Patentansprüche

1. Entwicklungsbank einer Luftfahrt-Softwareanwendung, welche die Produktion einer grafischen Mensch-Maschine-Schnittstelle auf Höhe einer oder mehrerer Anzeigeeinrichtungen gewährleistet, wobei die Bank EDV-Mittel umfasst, welche Software-Tools behandeln, welche dazu dienen, einerseits grafische Funktionen zu schaffen, zu simulieren oder zu integrieren, welche in einer "Definition File" genannten Datei beschrieben sind, welche Widgets beschreibt, und andererseits, logische Funktionen, welche es ermöglichen, den Inhalt der grafischen Funktionen angesichts von Eingangsereignissen an der Anzeigeeinrichtung bzw. Anzeigeeinrichtungen zu verändern,
- **dadurch gekennzeichnet, dass** die Bank einen einzigen grafischen Editor zur Konzeption einer in der oder in den Anzeigeeinrichtungen ausführbaren Software umfasst, wobei der Editor eine strukturierte Sprache produziert, welche:
- jedes in dem "Definition File" enthaltene Widget, welches funktionale Kapazitäten aufweist, beschreibt;
- konsumierte Variablen, genannt " input plugs", veränderbaren Attributen des Widgets zuordnet, wobei ein "input plug" ein spezifischer Datenwert ist, welcher es ermöglicht, eines oder mehrere grafische Attribute des Widgets dynamisch zu verändern;
- produzierte Variablen, genannt "output plugs", Ereignismeldungen zuordnet, welche durch das Widget produziert werden, wobei ein "output plug" ein Datenwert ist, welcher eine Zustandsänderungsanfrage der Einrichtungen meldet;
wobei die produzierten und die konsumierten Variablen dazu bestimmt sind, mit der funktionalen Logik einer "User Application" genannten Anwendung ausgetauscht zu werden.

2. Entwicklungsbank einer in einer oder mehreren Anzeigeeinrichtungen ausführbaren Software nach Anspruch 1, **dadurch gekennzeichnet, dass** die entwickelte Software, die dazugehörigen grafischen Funktionen und deren Funktionalitäten der Luftfahrtnorm ARINC 661 entsprechen.

3. Entwicklungsbank einer in einer oder mehreren Anzeigeeinrichtungen ausführbaren Software nach einem der Ansprüche 1 oder 2, **dadurch gekennzeichnet, dass** die strukturierte Sprache zur funktionalen Beschreibung in einer Beschreibungssprache vom Typ "XML", Abkürzung für "eXtended Markup Language", implementiert ist.

4. Entwicklungsbank einer in einer oder mehreren Anzeigeeinrichtungen ausführbaren Software nach den Ansprüchen 2 und 3, **dadurch gekennzeichnet, dass** die Bank ebenfalls Mittel zur Erzeugung der Mensch-Maschine-Schnittstellensoftware umfasst, welche folgende Funktionen gewährleistet:
- Übersetzung der funktionalen Beschreibungssprache in eine Programmiersprache vom Typ C oder C++ oder ADA;
- Aktivierung der Flusssteuerung in dem Code, der durch die Verwendung der Aktivierungs-"input plugs" erzeugt wird, welcher die Anwendung der ARINC 661-Befehle steuert;
- Aktivierung der Flusssteuerung in dem Code, der durch die Steuerung der Änderung der den veränderbaren Attributen zugeordneten "input plugs" erzeugt wird.

## Claims

1. A development system for an aeronautical software application ensuring the production of a graphical human-machine interface on one or more items of visual display equipment, said system comprising computer means processing software tools used to create, simulate or integrate, on the one hand, graphical functions, described in a file called "Definition File" describing widgets and, on the other hand, logic functions allowing the content of the graphical functions to be modified as a function of inbound events on the one or more items of visual display equipment,
**characterised in that** the system comprises a single graphical editor for designing software that can be executed in the one or more items of visual display equipment, said editor producing a structured language, which:
- describes each widget contained in the Definition File and having functional capabilities;
- associates consumed variables, called "input plugs", with the modifiable attributes of said widget, an "input plug" being a specific data item allowing dynamic modification of one or more graphical attributes of said widget;
- associates produced variables, called "output plugs", with the notifications of the events produced by said widget, with an "output plug" being a data item notifying a request to change the state of the items of equipment; the produced and consumed variables being intended to be exchanged with the functional logic of an application called "User Application".

2. The development system for software that can be executed in one or more items of visual display equipment as claimed in claim 1, **characterised in that** the developed software, the associated graphical functions and their functionalities comply with aeronautical standard ARINC 661.

3. The development system for software that can be executed in one or more items of visual display equipment as claimed in one of claims 1 or 2, **characterised in that** the functional description structured language is implemented in an "XML" (eXtended Markup Language) type description language.

4. The development system for software that can be executed in one or more items of visual display equipment as claimed in claims 2 and 3, **characterised in that** the system further comprises means for generating the human-machine interface software ensuring the following functions:
- translation of the functional description language into programming language of the C or C++ or ADA type;
- activation of the flow stream in the code generated by using activation "input plugs" controlling the application of the ARINC 661 commands;
- activation of the stream control in the code generated by controlling the modification of the "input plugs" associated with the modifiable attributes.
